# EUROPEAN PATENT SPECIFICATION

(11) **EP 3 726 147 B1**
(45) Date of publication and mention of the grant of the patent: **26.05.2021**
(21) Application number: 19382294.7
(22) Date of filing: 16.04.2019
(51) Int. Cl.: F24D 17/00, F24S 10/30, F28D 20/00

(54) **SOLAR THERMAL SYSTEM**
SOLARWÄRMESYSTEM
SYSTÈME THERMIQUE SOLAIRE

(43) Date of publication of application: 21.10.2020
(73) Proprietor: ORKLI, S. COOP., 20240 Ordizia (Gipuzkoa) (ES)
(72) Inventor: HERZOG HERZOG, Oscar, 20200 Beasain (ES); ARIZMENDI URRUZOLA, Miguel Maria, 20200 Beasain (ES)
(74) Representative: Igartua, Ismael

(56) References cited:
- EP-A1- 0 616 174
- EP-A1- 2 746 692
- EP-A1- 2 924 364
- WO-A1-2013/150525
- DE-A1- 4 239 286
- US-A- 4 269 167
- US-A- 5 575 276

## Description

### TECHNICAL FIELD

The present invention relates to a solar thermal system, in particular an integrated solar thermal system which generates domestic hot water instantaneously.

### PRIOR ART

Solar thermal systems suitable for heating domestic water using solar energy are known in the prior art. Said solar thermal systems comprise a collector which captures heat from the sun, a primary circuit through which a fluid which is heated by the collector circulates, and a secondary circuit through which domestic water circulates, the domestic water being heated through the primary circuit. These thermal systems comprise a storage tank which stores domestic water under pressure for subsequent use. As a result of said storage, when a user turns on a faucet or shower, hot water comes out immediately without having to wait for the water to heat up.

These tanks are generally made of stainless steel and generally subjected to pressure. Therefore, the known solutions have a cylindrical tank that is strong enough to withstand the pressure of the water stored therein. Planar geometries which can lead to stresses concentrating at specific points, causing the tank itself to burst, are avoided. Said tanks are arranged vertically.

US 4,574,779 A discloses a solar thermal system comprising a primary circuit through which a fluid configured for being heated by a collector circulates, and a storage tank housing therein an exchanger of the primary circuit. The storage tank houses domestic water and includes an inlet conduit and an outlet conduit for the domestic water, said domestic water housed in the storage tank being heated through the exchanger of the primary circuit. The solar thermal system includes an auxiliary tank arranged below the storage tank and is suitable for housing the fluid circulating through the primary circuit when the corresponding impeller pump is not in operation. Both tanks are arranged vertically. In particular, the collector, the exchanger of the primary circuit, and the auxiliary tank are arranged in a vertically descending order such that when the fluid is not circulating, it falls by gravity into the auxiliary tank.

EP 0616174 A1 discloses a solar thermal system comprising a collector, a primary circuit through which a fluid configurated for being heated by the collector, a tank wherein sanitary water and an exchanger of the primary circuit are housed, and an auxiliary tank configurated for housing the fluid of the primary circuit when said fluid is not circulating. The heat absorbed in the collector by the fluid can be relinquished in the auxiliary tank directly to the sanitary water housed in the tank.

### DISCLOSURE OF THE INVENTION

The object of the invention is to provide a solar thermal system, as defined in the claims.

The solar thermal system according to the invention comprises a collector, a primary circuit through which a fluid configured for being heated by the collector circulates, the primary circuit comprising a first exchanger through which the collector heats the fluid circulating through the primary circuit, a secondary domestic water circuit, a main tank in which the fluid of the primary circuit heats the domestic water of the secondary circuit, and an auxiliary tank configured for housing at least part of the fluid of the primary circuit when said fluid is not circulating.

The auxiliary tank is configured for heating the domestic water. An auxiliary tank is thereby obtained which, in addition to protecting the solar thermal system against extreme temperatures by housing the fluid of the primary circuit when the impelling means are not in operation and separating the air existing in said primary circuit from the fluid circulating through said primary circuit, collaborates in heating the domestic water.

The main tank, the auxiliary tank, the collector, and the primary circuit form an integrated structure. The solar thermal system comprises an enclosure in which the main tank, the auxiliary tank, the collector and the primary circuit are housed.

These and other advantages and features of the invention will become evident in view of the drawings and detailed description of the invention.

### DESCRIPTION OF THE DRAWINGS

Figure 1 shows a perspective view of an embodiment of a solar thermal system according to the invention.
Figure 2 shows an exploded view of the solar thermal system shown in Figure 1.
Figure 3 shows a plan view of the main tank of the solar thermal system shown in Figure 1.
Figure 4 shows a sectioned plan view of the main tank of the solar thermal system shown in Figure 1.
Figure 5 shows a sectioned side view of the main tank of the solar thermal system shown in Figure 1.

### DETAILED DISCLOSURE OF THE INVENTION

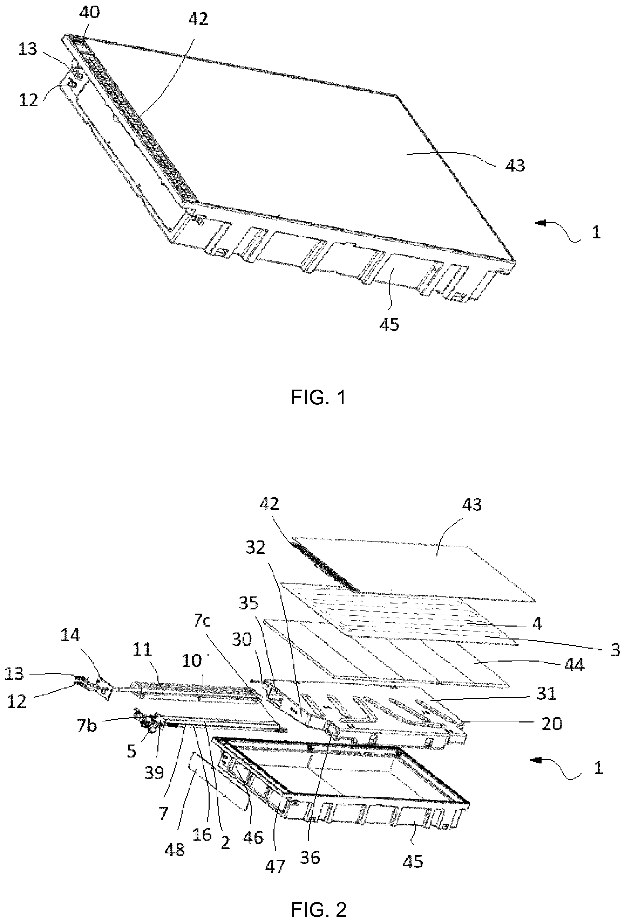

Figures 1 and 2 show an embodiment of the solar thermal system 1 according to the invention. The solar thermal system 1 comprises a collector 4, a primary circuit 2 through which a fluid which is heated by the collector 4 circulates, a secondary circuit 10 through which domestic water circulates, and a main tank 20 through which the fluid of the primary circuit 2 heats the domestic water of the secondary circuit 10.

The primary circuit 2 is a closed circuit comprising a first exchanger 3, shown with discontinuous lines in Figure 2, arranged below the collector 4 in which the fluid circulating through the primary circuit 2 is heated through the collector 4, a second exchanger 16 through which the heated circulating fluid exchanges heat with the secondary circuit 10, and impelling means 5 configured for maintaining the circulation of the fluid through the primary circuit 2. In a preferred embodiment, the impelling means 5 comprise a pump.

The secondary circuit 10 is an open circuit comprising a secondary exchanger 11 including in turn a domestic cold water inlet conduit 12 and a domestic hot water outlet conduit 13.

In the embodiment shown in the drawings, the secondary exchanger 11 is a coil exchanger.

The solar thermal system 1 of the invention further comprises a main tank 20 through which the fluid of the primary circuit 2 heats the domestic water of the secondary circuit 10, generating domestic hot water instantaneously. In the embodiment shown in the drawings, the main tank 20 comprises therein a technical fluid which is heated by the primary circuit 2, in particular by the second exchanger 16, and which in turn heats the domestic water. To that end, the second exchanger 16 of the primary circuit 2 and the secondary exchanger 11 of the secondary circuit 10 are arranged inside the main tank 20 submerged in the technical fluid. The technical fluid can be water or water mixed with antifreeze. The main tank 20 permanently contains technical fluid during the operation of the solar thermal system 1, where it is neither exchanged nor consumed.

Unlike other tanks of the prior art, the main tank 20 is not cylindrical but rather planar. The main tank 20 extends below the collector 4 such that it is arranged facing the largest possible surface of the collector 4. The main tank 20 comprises a substantially planar upper surface 31 which is arranged facing the collector 4, the first exchanger 3 of the primary circuit 2 being arranged outside the tank 20, between said upper surface 31 and the collector 4.

Accumulation of domestic hot water does not occur, so health concerns are eliminated. Furthermore, by circulating the domestic water through the secondary exchanger 11, the technical fluid stored in the main tank 20 is not pressurized, so it is possible to use non-metallic tanks of non-cylindrical geometry.

The primary circuit 2 of the solar thermal system 1 further comprises an auxiliary tank 7 configured for housing the fluid circulating through the primary circuit 2, circulating fluid being understood to be the fluid in liquid phase, and for separating the fluid from the air existing in the primary circuit 2. The auxiliary tank 7 is arranged in a substantially horizontal manner.

The auxiliary tank 7 is configured for heating domestic water. In the embodiment shown in the drawings, said auxiliary tank 7 is housed in the main tank 20 immersed in the technical fluid such that both the second exchanger 16 and the auxiliary tank 7 heat the technical fluid housed in the technical fluid heating area 21. In particular, said auxiliary tank 7 is arranged in the technical fluid heating area 21 of the main tank 20.

In the embodiment shown in the drawings, the auxiliary tank 7 is arranged above the second exchanger 16. The auxiliary tank 7 is a closed tank including a fluid inlet port 7a and a fluid outlet port 7b arranged respectively in facing side walls 7c of the auxiliary tank 7. The auxiliary tank 7 is substantially prismatic. Said auxiliary tank 7 is connected to the second exchanger 16 through an inlet conduit 6a connected to the fluid inlet port 7a and connected to the first exchanger 3 of the primary circuit 2 through the outlet port 7b.

The impelling means 5 of the primary circuit 2 are configured for impelling or interrupting the fluid communication between the collector 4 and the auxiliary tank 7, such that while said impelling means are in operation, the fluid of the primary circuit 2 goes through the auxiliary tank 7 following a horizontal trajectory. Moreover, the auxiliary tank 7 is configured for housing the fluid circulating through the primary circuit 2 when the fluid communication between the collector 4 and the auxiliary tank 7 is interrupted, i.e., when the activity of the impelling means 5 ceases. When the impelling means 5 are stopped, the circulating fluid of the primary circuit 2 falls by gravity, at least partially accumulating in the auxiliary device 7. In that situation, the circulating fluid of the auxiliary tank 7 continues to heat the technical fluid and therefore the domestic water.

The main tank 20 comprises a side surface 32 including an opening 35 through which the secondary exchanger 11 is introduced in or extracted from the main tank 20. The secondary exchanger 11 is fixed to said side surface 32 through a support 14, where said secondary exchanger 11 can be extracted. The assembly and replacement of said secondary exchanger 11 without having to change the entire main tank 20 is thereby facilitated.

In the embodiment shown in the drawings, the auxiliary tank 7 and the second exchanger 16 can also be extracted from the main tank 20. To that end, the main tank 20 includes a second opening 36 on a side surface 32 through which the auxiliary tank 7 together with the second exchanger 16 is introduced in or extracted from the main tank 20. The auxiliary tank 7 and the second exchanger 16 are fixed to said side surface 32 through another support 39. The assembly and replacement of said auxiliary tank 7 and/or of said second exchanger 16 without having to change the entire main tank 20 is thereby facilitated.

The solar thermal system 1 may comprise a non-depicted auxiliary resistor which is arranged inside the main tank 20, substantially parallel to the secondary exchanger 11. Said auxiliary resistor can be assembled such that it can be extracted from the main tank 20 through the support 14.

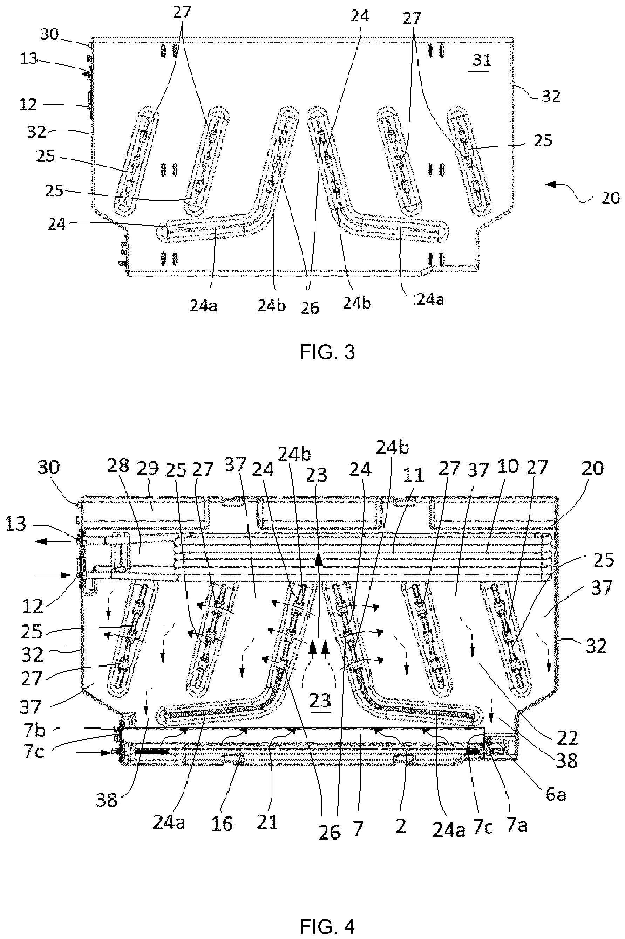

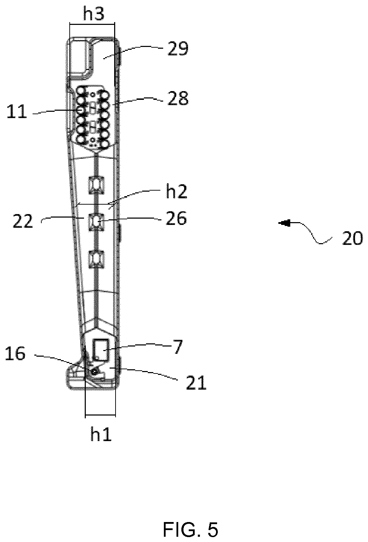

The main tank 20 comprises a technical fluid heating area 21, shown in Figures 4 and 5, in which the primary circuit 2 is partially housed, and a domestic water heating area 28 in which the secondary circuit 10 is partially housed. The volume of technical fluid comprised in the technical fluid heating area 21 is smaller than the volume of technical fluid housed in the domestic water heating area 28. The tank 20 further comprises a transmission area 22 in which the technical fluid coming from the technical fluid heating area 21 gradually heats the technical fluid housed in the transmission area 22. The transmission area 22 is arranged between the technical fluid heating area 21 and the domestic water heating area 28. The transmission area 22 comprises walls 24 demarcating a central channel 23 as a chimney, and openings 26 going through said walls 24 allowing the stratification of the technical fluid existing in the main tank 20 depending on the temperature, as shown in Figure 4. The walls 24 are substantially planar. The central channel 23 is demarcated by two walls 24 arranged partially facing one another, each of them including a first part 24a and a second part 24b, both parts being continuous to one another and forming an obtuse angle. The first parts 24a in turn demarcate the technical fluid heating area 21 whereas the second parts 24b are arranged facing one another.

The main tank 20 further comprises additional walls 25 demarcating recirculation channels 37 through which the technical fluid returns to the technical fluid heating area of the main tank 20 for heating. The additional walls 25 also include openings 27 going through said additional walls 25, allowing the temperature stratification of the technical fluid. The additional walls 25 are arranged substantially parallel to the walls 24 demarcating the central channel 23, in particular parallel to the second part 24b of said walls 24. Figure 4 depicts with arrows by way of illustration, part of the path of the technical fluid along the channels 23 and 37 and the corresponding openings 25 and 27 thereof.

Moreover, the second exchanger 16 of the primary circuit 2 is housed in the technical fluid heating area 21 of the main tank 20 whereas the secondary exchanger 11 is housed in the domestic water heating area 28 of the main tank 20. The technical fluid heating area 21 of the main tank 20 has a volume smaller than the volume of the transmission area 22 and of the domestic water heating area 28, respectively. As can be seen in Figure 5, the height h1 of the technical fluid heating area 21 is smaller than the height h2 of the transmission area 22 or the height h3 of the domestic water heating area 28, the purpose being so that a small amount of technical fluid is first heated such that it moves rapidly up to the domestic water heating area 28 and heats the domestic water circulating through the secondary exchanger 11. The technical fluid housed in the technical fluid heating area 21 is therefore rapidly heated by the second exchanger 16, the rapidly heated technical fluid moving up through the central channel 23 as it gradually mixes with the technical fluid existing in the central channel 23. The technical fluid is stratified according to its temperature such that, due to the chimney effect of the central channel 23, the technical fluid having a higher temperature moves up to the domestic water heating area 28 heating the domestic water circulating through the secondary exchanger 11 and goes back to the technical fluid heating area 21 through the adjacent recirculation channels 37 once it has given off heat. Simultaneously, the rest of the technical fluid existing in the central channel 23 exits through the openings 26 to the adjacent recirculation channels 37, the technical fluid being directed to the technical fluid heating area 21 through communication channels 38 communicating the transmission area 22 with the technical fluid heating area 21 of the main tank 20. Each communication channel 38 is demarcated by the respective side surface 32 of the main tank 20 and by an end of the wall 24 demarcating the central channel 23.

Moreover, the main tank 20 is configured for working without pressure. To that end, the main tank 20 comprises an air chamber 29 in the domestic water heating area 28 and at least one ventilation valve 30 (also known as pressure relief valve) which allows the main tank 20 not to be subjected to pressure. In this manner, when the technical fluid housed in the main tank 20 is heated expanding the volume thereof, the ventilation valve 30 allows extracting air housed in the air chamber 29, whereas when the technical fluid is cooled, said valve 30 allows introducing air back into the air chamber 29. Furthermore, the main tank 20 can therefore be made of a non-metallic material. In the embodiment shown in the drawings, the main tank 20 is made of a plastic material. In this manner, in addition to reducing weight, corrosion problems in said main tank 20 are avoided. As mentioned above, the main tank 20 can have a non-cylindrical geometry as it is not subjected to pressure.

The solar thermal system 1 according to the invention is an integrated system, i.e., are integrated in one and the same structure the collector 4, the primary circuit 2, the main tank 20 and the auxiliary tank 7, as well as the secondary exchanger 11 of the secondary circuit forming a compact integrated structure. To that end, in this embodiment the solar thermal system 1 includes an enclosure 45 in which there are housed the collector 4, the first and second exchangers of the primary circuit 2, the main tank 20, the auxiliary tank 7, the secondary exchanger 11 of the secondary circuit, and an insulation layer 44 arranged between the tank 20 and the first exchanger 3 of the primary circuit 2. A cover 43 is arranged on the collector 4 closing the enclosure 45. The enclosure 45 includes openings 46 and 47 to allow laterally extracting the secondary exchanger 11 and/or the second exchanger 16 from the primary circuit 2 and the auxiliary tank 7, said openings 46 and 47 being closed through a lid 48.

The solar thermal system 1 is an autonomous system which, from the fluid connection viewpoint, only requires being connected to the rest of the secondary circuit 10 through the domestic water inlet conduit 12 and the domestic water outlet conduit 13 arranged in the solar thermal system 1.

The solar thermal system 1 further comprises a photovoltaic panel 42 arranged on the collector 4 and supported in the enclosure 45, and sensors 40 configured for carrying out the readings of data such as the temperature of the fluid circulating through the primary circuit 2, of the domestic water circulating through the secondary circuit 10, domestic hot water flow rate, etc. Said sensors 40 are powered through a photovoltaic cell arranged in the photovoltaic panel 42. The solar thermal system 1 can be remotely controlled as a result of this data, such that the impelling means 5 can be activated/deactivated depending on the temperature of the different fluids, protecting the system against excessive temperatures or freezing, for example.

## Claims

1. Solar thermal system comprising a collector (4), a primary circuit (2) through which a fluid configured for being heated by the collector (4) circulates, the primary circuit (2) comprising a first exchanger (3) through which the collector (4) heats the fluid circulating through the primary circuit (2), a secondary domestic water circuit (10), a main tank (20) in which the fluid of the primary circuit (2) heats the domestic water of the secondary circuit (10), and an auxiliary tank (7) configured for housing at least part of the fluid of the primary circuit (2) when said fluid is not circulating and for heating the domestic water, **characterized in that** the main tank (20), the auxiliary tank (7), the collector (4), and the primary circuit (2) form an integrated structure, the solar thermal system comprising an enclosure (45) in which the main tank (20), the auxiliary tank (7), the collector (4) and the primary circuit (2) are housed.

2. Solar thermal system according to the preceding claim, wherein the auxiliary tank (7) is housed in the main tank (20).

3. Solar thermal system according to the preceding claim, wherein the auxiliary tank (7) is housed in the lower part of the main tank (20).

4. Solar thermal system according to any of the preceding claims, wherein the primary circuit (2) comprises a second exchanger (16) housed in the main tank (20) through which the fluid of the primary circuit (2) heats the domestic water, the auxiliary tank (7) preferably being arranged above the second exchanger (16).

5. Solar thermal system according to any of the preceding claims, wherein the solar thermal system is arranged such that, during circulation of the fluid circulating through the primary circuit (2), said fluid is configured for going through the auxiliary tank (7).

6. Solar thermal system according to any of the preceding claims, wherein the auxiliary tank (7) is arranged in a substantially horizontal manner.

7. Solar thermal system according to any of the preceding claims, wherein the solar thermal system is arranged such that the auxiliary tank (7) is laterally removable from the main tank (20).

8. Solar thermal system according to any of the preceding claims, wherein the secondary circuit (10) comprises a secondary exchanger (11) housed inside the main tank (20), the main tank (20) comprising a technical fluid transmitting heat from the fluid circulating through the primary circuit (2) to the domestic water circulating through the secondary exchanger (11).

## Patentansprüche

1. Solarwärmesystem umfassend einen Kollektor (4), einen Primärkreislauf (2), durch den ein zur Erwärmung durch den Kollektor (4) ausgelegtes Fluid zirkuliert, wobei der Primärkreislauf (2) einen ersten Austauscher (3), durch den der Kollektor (4) das durch den Primärkreislauf (2) zirkulierende Fluid erwärmt, einen sekundären Haushaltswasserkreislauf (10), einen Haupttank (20), in dem das Fluid des Primärkreislaufs (2) das Haushaltswasser des Sekundärkreislaufs (10) erwärmt und einen Hilfstank (7), der zur Aufnahme mindestens eines Teils des Fluids des Primärkreislaufs (2) bei fehlender Zirkulation des genannten Fluids und zur Erwärmung des Haushaltswassers ausgebildet ist, umfasst, **dadurch gekennzeichnet, dass** der Haupttank (20), der Hilfstank (7), der Kollektor (4) und der Primärkreislauf (2) eine einstückige Konstruktion bilden, wobei das Solarwärmesystem ein Gehäuse (45) umfasst, in dem der Haupttank (20), der Hilfstank (7), der Kollektor (4) und der Primärkreislauf (2) untergebracht sind.

2. Solarwärmesystem nach dem vorstehenden Anspruch, wobei der Hilfstank (7) in dem Haupttank (20) untergebracht ist.

3. Solarwärmesystem nach dem vorhergehenden Anspruch, wobei der Hilfstank (7) im unteren Teil des Haupttanks (20) untergebracht ist.

4. Solarwärmesystem nach einem der vorstehenden Ansprüche, wobei der Primärkreislauf (2) einen im Haupttank (20) untergebrachten zweiten Austauscher (16) umfasst, durch den das Fluid des Primärkreislaufs (2) das Haushaltswasser erwärmt, wobei der Hilfstank (7) vorzugsweise oberhalb des zweiten Austauschers (16) angeordnet ist.

5. Solarwärmesystem nach einem der vorstehenden Ansprüche, wobei das Solarwärmesystem so ausgestaltet ist, dass während der Zirkulation des durch den Primärkreislauf (2) zirkulierenden Fluids das genannte Fluid durch den Hilfstank (7) geleitet wird.

6. Solarwärmesystem nach einem der vorstehenden Ansprüche, wobei der Hilfstank (7) im Wesentlichen horizontal angeordnet ist.

7. Solarwärmesystem nach einem der vorstehenden Ansprüche, wobei das Solarwärmesystem so ausgestaltet ist, dass der Hilfstank (7) seitlich vom Haupttank (20) abnehmbar ist.

8. Solarwärmesystem nach einem der vorstehenden Ansprüche, wobei der Sekundärkreislauf (10) einen im Inneren des Haupttanks (20) untergebrachten Sekundäraustauscher (11) umfasst, wobei der Haupttank (20) ein technisches Fluid enthält, das Wärme von dem durch den Primärkreislauf (2) zirkulierenden Fluid auf das durch den Sekundäraustauscher (11) zirkulierende Haushaltswasser überträgt.

## Revendications

1. Système thermique solaire comprenant un collecteur (4), un circuit primaire (2) dans lequel circule un fluide configuré pour être chauffé par le collecteur (4), le circuit primaire (2) comprenant un premier échangeur (3) dans lequel le collecteur (4) chauffe le fluide circulant dans le circuit primaire (2), un circuit secondaire d'eau sanitaire (10), un réservoir principal (20) dans lequel le fluide du circuit primaire (2) chauffe l'eau sanitaire du circuit secondaire (10), et un réservoir auxiliaire (7) configuré pour loger au moins une partie du fluide du circuit primaire (2) lorsque ledit fluide ne circule pas et pour chauffer l'eau sanitaire, **caractérisé en ce que** le réservoir principal (20), le réservoir auxiliaire (7), le collecteur (4) et le circuit primaire (2) forment une structure intégrée, le système solaire thermique comprenant une enceinte (45) dans laquelle sont logés le réservoir principal (20), le réservoir auxiliaire (7), le collecteur (4) et le circuit primaire (2).

2. Système thermique solaire selon la revendication précédente, dans lequel le réservoir auxiliaire (7) est logé dans le réservoir principal (20).

3. Système thermique solaire selon la revendication précédente, dans lequel le réservoir auxiliaire (7) est logé dans la partie inférieure du réservoir principal (20).

4. Système thermique solaire selon l'une des revendications précédentes, dans lequel le circuit primaire (2) comprend un second échangeur (16) logé dans le réservoir principal (20) par lequel le fluide du circuit primaire (2) chauffe l'eau domestique, le réservoir auxiliaire (7) étant de préférence disposé au-dessus du second échangeur (16).

5. Système thermique solaire selon l'une des revendications précédentes, dans lequel le système solaire thermique est disposé de telle sorte que, pendant la circulation du fluide circulant dans le circuit primaire (2), ledit fluide est configuré pour passer par le réservoir auxiliaire (7).

6. Système thermique solaire selon l'une quelconque des revendications précédentes, dans lequel le réservoir auxiliaire (7) est disposé de manière sensiblement horizontale.

7. Système thermique solaire selon l'une des revendications précédentes, dans lequel le système solaire thermique est disposé de telle sorte que le réservoir auxiliaire (7) peut être retiré latéralement du réservoir principal (20).

8. Système thermique solaire selon l'une des revendications précédentes, dans lequel le circuit secondaire (10) comprend un échangeur secondaire (11) logé à l'intérieur du réservoir principal (20), le réservoir principal (20) comprenant un fluide technique qui transmet la chaleur du fluide circulant dans le circuit primaire (2) à l'eau domestique circulant dans l'échangeur secondaire (11).
